# EUROPÄISCHE PATENTSCHRIFT

(11) **EP 4 397 541 B1**
(45) Veröffentlichungstag und Bekanntmachung des Hinweises auf die Patenterteilung: **16.04.2025**
(21) Anmeldenummer: 23150507.4
(22) Anmeldetag: 05.01.2023
(51) Int. Cl.: B60P 3/07, B60P 3/36, B60P 1/44

(54) **REISEMOBIL MIT LADEBORDWAND**
MOTOR VEHICLE WITH LOADING TAILGATE
VÉHICULE DE VOYAGE AVEC HAYON ÉLÉVATEUR

(43) Veröffentlichungstag der Anmeldung: 10.07.2024
(73) Patentinhaber: Bischoff, Thomas, 76297 Stutensee (DE)
(72) Erfinder: Bischoff, Thomas, 76297 Stutensee (DE)
(74) Vertreter: Christ, Niko

(56) Entgegenhaltungen:
- DE-A1- 2 645 025
- DE-U1- 202004 006 066
- US-B1- 7 387 480

## Beschreibung

Die vorliegende Erfindung betrifft ein Reisemobil umfassend einen Innenraum mit einer Zugangsöffnung, der durch die Ladebordwand verschließbar ist.

Es ist im Stand der Technik bekannt, Fahrzeuge für Reisen auszugestalten, die als Reisemobile einen Innenraum mit wohnlicher Ausstattung vorsehen. Derartige Fahrzeuge können in verschiedene Wohnräume eingeteilt sein, teilweise sogar bereits Garagenabteile im Bodenbereich vorsehen, in welche Fahrzeuge mit einer Rampe hinein verfahren werden können. Derartige Abteile sind allerdings in aller Regel schwer zugänglich, da sie im Bodenbereich des Fahrzeugs sehr eng geschnitten und möglichst klein und niedrig ausgestaltet sind.

Ein Reisemobil ist ein Kraftfahrzeug mit einer zum Wohnen geeigneten Inneneinrichtung, mit der alle für eine längere Reise notwendigen Bedarfsgegenstände transportiert werden können. Daher sind an bekannten Reisemobilen nur Türen vorgesehen, die über einen Tritt oder eine Leiter in das Innere des Aufbaus führen. Besonders schwere Lasten können durch diese Öffnungen nicht einfach angehoben und im Innenraum des Reisemobils für die Reise verstaut werden. Auch Expeditionsequipment kann in der Regel nicht ohne ein Hubladesystem im Campingfahrzug verstaut werden.

Aus der US 7,387,480 B1 ist ein Mehrzweckanhänger mit einem Liftsystem vorbekannt. Der Anhänger umfasst dabei einen Rahmen mit einem

Fahrzeugstaufach, das sich über einem Bootsstaufach befindet, und ein Werkstattfach, das sich im vorderen Bereich befindet.

Ferner ist aus der DE 26 45 025 A1 ein Wechselaufbau für Nutzfahrzeuge, insbesondere für Lastkraftfahrzeuge, vorbekannt. Der Wechselaufbau umfasst einen kastenartigen Rahmen mit Längs- und Querträgern, vertikale Holme sowie bewegliche Vertikalstützen und zeichnet sich dadurch aus, dass dieser vier in vertikaler Richtung verstellbare Stützen aufweist.

Letztlich ist aus der DE 20 2004 006 066 U1 ein Lastkraftwagen, der insbesondere zum Wohnmobil bzw. Reisemobil aufgerüstet ist, vorbekannt. Dieser umfasst einen Kastenaufbau mit Fahrerhaus und einem Laderaum, wobei dem Laderaum ein Hubwerk angeschlossen ist, dessen Hubladebühne im Wesentlichen in horizontale Lage auf Fahrbahn-Niveau absenkbar und auf ein Ladeflächen-Niveau anhebbar ist.

Vor diesem Hintergrund liegt der Erfindung die Aufgabe zugrunde, ein Reisemobil anzugeben, an welchem Lasten, wie Zweiräder, Freizeitgegenstände und Gepäck, einfach und bequem in den Innenraum befördert werden können und der Innenraum gegenüber der Außenwelt zusätzlich abgedichtet bzw. isoliert wird.

Dies gelingt durch ein Reisemobil mit einer Ladebordwand gemäß den Merkmalen des unabhängigen Anspruchs 1. Weitere sinnvolle Ausgestaltungen können den sich anschließenden abhängigen Ansprüchen entnommen werden.

Erfindungsgemäß ist ein Reisemobil mit einer Ladebordwand vorgesehen, umfassend einen Innenraum mit einer Zugangsöffnung, der durch die Ladebordwand verschließbar ist, wobei die Ladebordwand einen Hubrahmen und wenigstens eine Außenklappe umfasst und wobei die Außenklappe am Hubrahmen gelenkig befestigt und über wenigstens einen Hubzylinder betätigt ist, sodass die Außenklappe von einer Verschlussposition vom Fahrzeug weg in eine Beladeposition schwenkbar und der Hubrahmen vertikal verfahrbar ist.

Reisemobile dienen als Transportmittel und Wohnraum für längere Reisen und bieten ausreichend Platz, um Bedarfsgegenstände zu transportieren. Im Innenraum sollte zusätzlich Platz vorhanden sein, um im Inneren des Reisemobils übernachten zu können. Neben dem Gepäck wollen viele Reisende auch Fahrräder, Motorräder mit Ersatzreifen, Stückgut oder andere Gegenstände transportieren, die mit reiner Körperkraft nicht oder nur schwer anhebbar sind. Diese können mit der Ladebordwand angehoben und im Reisemobil sicher verstaut werden. Daher ist eine Außenklappe vorgesehen, welche den Innenraum des Reisemobils verschließen und welche in eine Beladeposition geschwenkt werden kann. In der Beladeposition kann die Außenklappe über einen Hubrahmen abgesenkt werden, sodass ein leichtes Beladen der Außenklappe möglich ist. Danach kann diese auf das Niveau des Fahrzeugbodens angehoben werden, sodass die Lasten im Innenraum verstaut werden können.

Ferner ist der Innenraum gleichzeitig durch eine Innenklappe verschließbar, welche in einer Verschlussposition im Wesentlichen parallel zur Außenklappe angeordnet ist und welche vom Fahrzeug weg an einem Gelenk in Richtung der Oberkante der Zugangsöffnung verschwenkbar ist. Das Vorliegen einer Außen- und einer zusätzlichen Innenklappe hat den Vorteil, dass die Zugangsöffnung zweifach verschlossen werden kann und der Innenraum hierdurch zusätzlich abgedichtet und isoliert wird. An der Innenklappe kann dafür wenigstens ein Dichtelement vorgesehen sein, welches mit korrespondierenden Kanten am Aufbau des Reisemobils zusammenwirkt.

Die Außenklappe kann vom Fahrzeug weg in Richtung Unterseite des Fahrzeugs schwenkt werden. Die Innerklappe kann in Richtung der Oberkante des Fahrzeugs geschwenkt werden, sodass der Innenraum des Reisemobils geöffnet ist. Denkbar wäre auch, dass die Innenklappe als Rolltor ausgebildet ist. Die Außenklappe hingegen sollte eine hinreichende Stabilität aufweisen, damit schwere Lasten stabil darauf transportiert werden können. Im Einsatz kann zudem die Außenklappe als Terrasse des Reisemobils, die Innenklappe, soweit als Klappe ausgeführt, als Sonnen- oder Regenschutz eingesetzt werden.

Der Hubrahmen kann mittels eines Linearantriebs vertikal verfahrbar sein. Ein elektrischer Linearantrieb ist eine Vorrichtung, welche, durch eine Drehbewegung einer Spindelwelle, angetrieben von einem Elektromotor dessen Drehbewegung in einen axialen Vorschub umsetzt. Die Linearbewegung kann genutzt werden, um die Außenklappe an dem Hubrahmen geführt anzuheben und abzusenken.

Bevorzugtermaßen kann der Linearantrieb beiderseits angeordnete und motorisch angetriebene Zahnriemen aufweisen, welche mit korrespondierenden Zahnschienen zusammenwirken. Zahnriemen sind Treibriemen mit Zahnung, die form- und kraftschlüssig in den Zahnschienen laufen, wodurch die Außenklappe vertikal am Hubrahmen bewegt werden kann. Damit die Zahnriemen die Außenklappe bewegen können, sind sie seitlich am Hubrahmen angebracht.

Der Linearantrieb kann hydraulische oder pneumatische Zylinder zum Heben und Senken des Hubrahmens aufweisen. Der Linearantrieb kann, wie vorstehend beschrieben, elektrisch oder aber pneumatisch oder hydraulisch betrieben sein. Diese Antriebsformen stellen genügend Kraft zur Verfügung, um den Hubrahmen anzutreiben und die Außenklappe anzuheben.

In konkreter Ausführung kann eine Schwelle einen Spalt zwischen dem Innenraum und der Ladebordwand, unter Überquerung des Hubrahmens, übergreifen. Dies ist besonders vorteilhaft, da es so ermöglicht ist, dass Lasten, ohne diese anzuheben von der Außenklappe in den Innenraum geschoben werden können. Ein Spalt würde mit seinen Kanten ein Hindernis darstellen, welches beim Transport überbrückt werden müsste.

Im Innenraum können auf dem Boden und an den Seitenwänden Befestigungslaschen zur Befestigung von Gegenständen mit Befestigungsgurten angebracht sein. Motorräder oder andere Lasten sollten beim Transport im Reisemobil abgesichert werden, indem diese an den Innenwänden und am Boden des Innenraums mit Befestigungsgurten fixiert werden. Andere Befestigungs- und Aufbewahrungsmöglichkeiten wären ebenfalls denkbar, wie etwa Regale oder Stützrahmen.

In konkreter Ausführung kann der Innenraum mithilfe einer Trennwand in eine zur Zugangsöffnung hin offene Garage und einen Wohnbereich unterteilt sein, wobei der Wohnbereich sich über die Garage hinweg erstreckt. So kann die Fläche des Innenraums optimal genutzt werden. Die Garage ist von der Außenklappe sowie vom Wohnraum her erreichbar und bietet Stauraum für Transportgüter, wohingegen über der Garage ein separater Raum vorliegen kann, der als Wohnbereich dient und in welchem beispielsweise besonders vorteilhaft Schlafkojen angebracht sein können.

Die vorstehend beschriebene Erfindung wird im Folgenden anhand eines Ausführungsbeispiels näher erläutert.

Es zeigen
- Figur 1: ein Aufbau eines Reisemobils mit einer Ladebordwand in der Beladeposition in seitlichem Längsschnitt,
- Figur 2: eine vom Reisemobil losgelöste Ladebordwand in der Seitenansicht, sowie
- Figur 3: ein Reisemobil mit einem Aufbau gemäß Figur 1 in einer Seitenansicht.

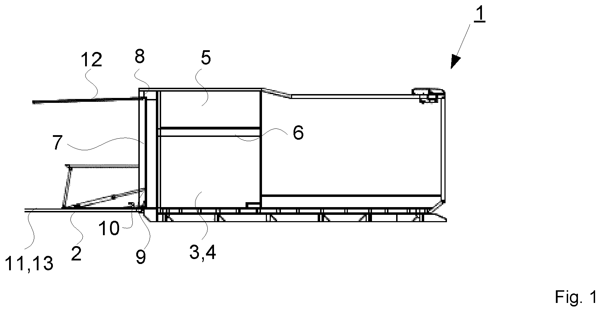

Der Figur 1 ist ein Aufbau eines Reisemobils 1 mit einer Ladebordwand 2 zu entnehmen. Die Ladebordwand 2 kann eine Zugangsöffnung 7 eines Innenraums 3 verschließen. Hierzu umfasst sie eine Außenklappe 11 und eine Innenklappe 12. Die Außenklappe 11 liegt in der Figur 1 in einer Beladeposition 13 vor, so dass Lasten zunächst auf der Ladebordwand 2 abgestellt werden und dann mit dieser auf die in Figur 1 gezeigte Ebene der Ladekante angehoben werden können. Der Innenraum 3 des Reisemobils umfasst eine Garage 4, in welche die Lasten anschließend von der Außenklappe 11 her verbracht werden können, sowie einen an die Garage 4 angrenzenden und diese übergreifenden Wohnbereich 5. Der Wohnbereich 5 liegt über eine Trennwand 6 abgetrennt neben und über der Garage 4. In ihm befinden sich oberhalb der Garage 4 zwei Schlafkojen, so dass die durch die Garage erheblich verringerte Raumhöhe sinnvoll genutzt werden kann. Die Außenklappe 11 kann über einen Hubrahmen 9 vertikal verfahren werden, sodass Lasten, welche sich auf der Ladebordwand 2 befinden, in den Innenraum 3 transportiert werden können. Die Außenklappe 11 kann zum Öffnen von der Verschlussposition in eine Beladeposition 13 geschwenkt werden, wohingegen die Innenklappe 12 von einer Verschlussposition in eine an der Oberkante 8 der Zugangsöffnung 7 ausgelenkte Position geschwenkt werden kann.

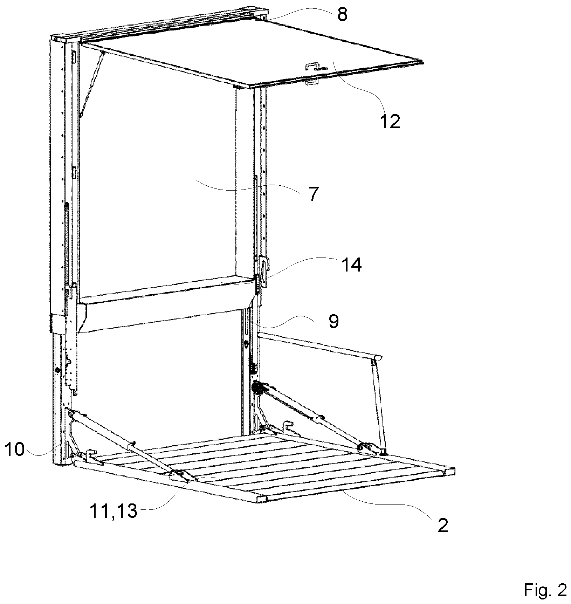

In Figur 2 ist die vom Reisemobil 1 losgelöste Ladebordwand 2 dargestellt. Sie besteht aus einem Hubrahmen 9, an dem die Außenklappe 11 angebracht ist. Der Hubrahmen 9 kann die Außenklappe 11 vertikal verfahren, sodass Lasten in das Reisemobil 1 transportiert werden können. Die Innenklappe 12 liegt ebenfalls geöffnet vor und kann im ausgeklappten Zustand zusätzlich als Sonnenschutz dienen, welcher oberhalb der als Terrasse einsetzbaren Außenklappe 11 aufgespannt ist. Die Innenklappe 12 und die Außenklappe 11 verschließen bedarfsweise den Innenraum 7 des Reisemobils 1. In dem gezeigten Zustand ist der Hubrahmen 9 soweit ausgefahren, dass ein Last, wie etwa ein Motorrad, welches in der Garage mitgeführt werden soll, vom Boden aus leicht auf die Außenklappe 11 geschoben werden kann. Ein seitliches Geländer sorgt für Sicherheit auf der Außenklappe 11. Wird nun der Hubrahmen 9 aufwärts bewegt, so nimmt er die Außenklappe 11 mit, die Innenklappe 12 hingegen bleibt an der Oberkante 8 der Zugangsöffnung 7 angelenkt in ihrer Position. Erreicht die Außenklappe das Höhenniveau einer Schwelle 14, so stoppt die Bewegung und das zuvor auf die Außenklappe 11 geladene Material kann bequem in die Garage 4 verladen, eventuell das Motorrad in die Garage 4 geschoben und dort verzurrt werden.

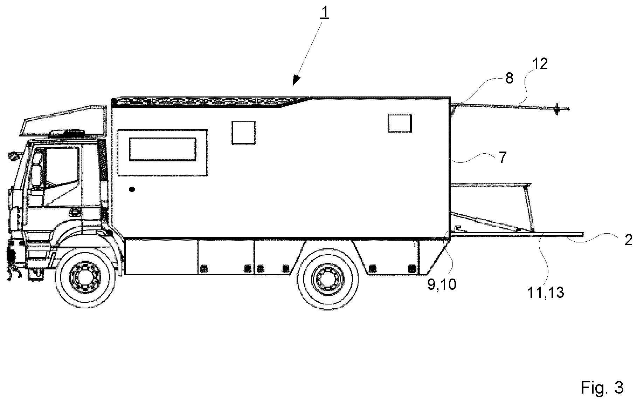

Figur 3 zeigt das Reisemobil 1 als Ganzes in seitlicher Draufsicht, in der zuletzt beschriebenen Lage. Die Innenklappe 12 und die Außenklappe 11 liegen jeweils in einer Beladeposition 13 vor und können von der Beladeposition 13 nun in eine Verschlussposition geschwenkt werden. Hierzu wird zunächst die Innenklappe 12 heruntergeklappt und verschließt damit die Zugangsöffnung 7. Am Rand der Innenklappe 12 angebrachte Dichtelemente sorgen für eine ausreichende Abdichtung gegen Kälte und Feuchtigkeit, die anschließend in Gegenrichtung parallel zu der Innenklappe 12 heran zu schwenkende Außenklappe 11 bildet eine zweite, vollständige Abdeckung der Zugangsöffnung und sorgt für eine weitere, robustere Verschlussschicht des Inneren des Reisemobils 1.

Vorstehend beschrieben ein Reisemobil mit einer Ladebordwand, mit welcher Lasten, wie Zweiräder, Freizeitgegenstände und Gepäck in einen Innenraum angehoben und verstaut werden können.

### BEZUGSZEICHENLISTE

- 1: Reisemobil
- 2: Ladebordwand
- 3: Innenraum
- 4: Garage
- 5: Wohnbereich
- 6: Trennwand
- 7: Zugangsöffnung
- 8: Oberkante
- 9: Hubrahmen
- 10: Gelenk
- 11: Außenklappe
- 12: Innenklappe
- 13: Beladeposition
- 14: Schwelle

## Patentansprüche

1. Reisemobil mit einer Ladebordwand (2), umfassend einen Innenraum (3) mit einer Zugangsöffnung (7), der durch die Ladebordwand (2) verschließbar ist, wobei die Ladebordwand (2) einen Hubrahmen (9) und wenigstens eine Außenklappe (11) umfasst und wobei die Außenklappe (11) am Hubrahmen (9) gelenkig befestigt und über wenigstens einen Hubzylinder betätigt ist, sodass die Außenklappe (11) von einer Verschlussposition vom Fahrzeug weg in eine Beladeposition (13) schwenkbar und der Hubrahmen (9) vertikal verfahrbar ist,
**dadurch gekennzeichnet, dass** der Innenraum (3) gleichzeitig durch eine Innenklappe (12) verschließbar ist, welche in einer Verschlussposition im Wesentlichen parallel zur Außenklappe (11) angeordnet ist und welche vom Fahrzeug weg um ein an einer Oberkante (8) der Zugangsöffnung (7) angeordnetes Gelenk (10) verschwenkbar ist.

2. Reisemobil gemäß Anspruch 1, **dadurch gekennzeichnet, dass** der Hubrahmen (9) mittels eines Linearantriebs vertikal verfahrbar ist.

3. Reisemobil gemäß Anspruch 2, **dadurch gekennzeichnet, dass** der Linearantrieb beiderseits angeordnete und motorisch angetriebene Zahnriemen aufweist, welche mit korrespondierenden Zahnschienen zusammenwirken.

4. Reisemobil gemäß Anspruch 2 **dadurch gekennzeichnet, dass** der Linearantrieb hydraulische oder pneumatische Zylinder zum Heben und Senken des Hubrahmens (9) aufweist.

5. Reisemobil gemäß einem der vorhergehenden Ansprüche **dadurch gekennzeichnet, dass** eine Schwelle (14) einen Spalt zwischen dem Innenraum (3) und der Ladebordwand (2), unter Überquerung des Hubrahmen (9), übergreift.

6. Reisemobil gemäß einem der vorhergehenden Ansprüche, **dadurch gekennzeichnet, dass** im Innenraum (3) auf dem Boden und an den Seitenwänden Befestigungslaschen zur Befestigung von Gegenständen mit Befestigungsgurten angebracht sind.

7. Reisemobil gemäß einem der vorhergehenden Ansprüche, **dadurch gekennzeichnet, dass** der Innenraum (3) mithilfe einer Trennwand (6) in eine zur Zugangsöffnung (7) hin offene Garage (4) und einen Wohnbereich (5) unterteilt ist, wobei der Wohnbereich (5) sich über die Garage (4) hinweg erstreckt.

## Claims

1. Motorhome having a tail lift (2), comprising an interior (3) which has an access opening (7) and can be closed by the tail lift (2), the tail lift (2) comprising a lifting frame (9) and at least one outer flap (11) and the outer flap (11) being hingedly attached to the lifting frame (9) and actuated via at least one lifting cylinder so that the outer flap (11) can be pivoted from a closed position away from the vehicle into a loading position (13) and the lifting frame (9) can be moved vertically, **characterized in that** the interior (3) can be closed simultaneously by an inner flap (12) which, in a closed position, is arranged substantially parallel to the outer flap (11) and which can be pivoted away from the vehicle around a joint (10) arranged on an upper edge (8) of the access opening (7).

2. Motorhome according to claim 1, **characterized in that** the lifting frame (9) can be moved vertically by means of a linear drive.

3. Motorhome according to claim 2, **characterized in that** the linear drive has motor-driven toothed belts arranged on both sides, which interact with corresponding toothed rails.

4. Motorhome according to claim 2, **characterized in that** the linear drive has hydraulic or pneumatic cylinders for raising and lowering the lifting frame (9).

5. Motorhome according to any of the preceding claims,
**characterized in that** a threshold (14) spans a gap between the interior (3) and the tail lift (2), crossing the lifting frame (9).

6. Motorhome according to any of the preceding claims,
**characterized in that** in the interior (3) on the floor and on the side walls there are fastening tabs for fastening objects with fastening straps.

7. Motorhome according to any of the preceding claims,
**characterized in that** the interior (3) is divided by means of a partition wall (6) into a garage (4) which is open toward the access opening (7) and a living area (5), the living area (5) extending over the garage (4).

## Revendications

1. Autocaravane comportant un hayon élévateur (2), comprenant un espace intérieur (3) comportant une ouverture d'accès (7) qui peut être fermée par le hayon élévateur (2), dans laquelle le hayon élévateur (2) comprend un cadre de levage (9) et au moins un volet extérieur (11) et dans laquelle le volet extérieur (11) est fixé de manière articulée au cadre de levage (9) et est actionné par l'intermédiaire d'au moins un vérin de levage, de sorte que le volet extérieur (11) peut pivoter en s'éloignant du véhicule dans une position de chargement (13) à partir d'une position de fermeture et que le cadre de levage (9) peut être déplacé verticalement, **caractérisée en ce que** l'espace intérieur (3) peut être fermé simultanément par un volet intérieur (12) qui, dans une position de fermeture, est disposé sensiblement parallèlement au volet extérieur (11) et qui peut pivoter en s'éloignant du véhicule autour d'une articulation (10) disposée sur un bord supérieur (8) de l'ouverture d'accès (7).

2. Autocaravane selon la revendication 1, **caractérisée en ce que** le cadre de levage (9) peut être déplacé verticalement au moyen d'un entraînement linéaire.

3. Autocaravane selon la revendication 2, **caractérisée en ce que** l'entraînement linéaire présente des courroies dentées disposées des deux côtés et entraînées par moteur, lesquelles coopèrent avec des rails dentés correspondants.

4. Autocaravane selon la revendication 2 **caractérisée en ce que** l'entraînement linéaire présente des vérins hydrauliques ou pneumatiques pour soulever et abaisser le cadre de levage (9).

5. Autocaravane selon l'une des revendications précédentes **caractérisée en ce qu'un** seuil (14) franchit un interstice entre l'espace intérieur (3) et le hayon élévateur (2), en traversant le cadre de levage (9).

6. Autocaravane selon l'une des revendications précédentes,
**caractérisée en ce que** des pattes de fixation sont prévues dans l'espace intérieur (3) sur le plancher et sur les parois latérales pour fixer des objets avec des sangles de fixation.

7. Autocaravane selon l'une des revendications précédentes, **caractérisée en ce que** l'espace intérieur (3) est divisé à l'aide d'une cloison (6) en un garage (4) ouvert vers l'ouverture d'accès (7) et en une zone de vie (5), dans laquelle la zone de vie (5) s'étend au-delà du garage (4).
